# EUROPEAN PATENT APPLICATION

(11) **EP 4 664 712 A1**
(43) Date of publication of application: **17.12.2025**
(21) Application number: 24181924.2
(22) Date of filing: 13.06.2024
(51) Int. Cl.: H02J 7/00, H02M 7/483, H02M 7/49

(54) **BATTERY STORAGE SYSTEM WITH ASYMMETRIC OUTPUT VOLTAGES**

(71) Applicant: STABL Energy GmbH, 81379 München (DE)
(72) Inventor: Singer, Arthur, 81379 München (DE); Meyer-Schwickerath, Julian, 81379 München (DE)
(74) Representative: Lohr, Jöstingmeier & Partner Patent- und Rechtsanwälte mbB

(57) **Abstract**

A 3-phase battery storage system has three strings of battery modules configured to deliver power to an external port or to receive power from the external port. First ends of the strings are connected together to a common point and second ends of the strings are connected to a phase output port of an external port to deliver individual AC voltages, all having the same frequency f0 and period t0. The common point is insulated from the external port and the strings are configured such that the sum of the voltages at the three phase output ports differs from the voltage at the common point in at least 10% of the period t0.

## Description

### Field of the invention

The invention relates to a battery storage system using multilevel converters forming a three-phase system and to a method for operating such a battery storage system.

### Description of the related art

EP 4 312 336 A1 discloses a battery system having a multilevel converter topology comprising multiple strings of multilevel converters. With three of such multilevel converter strings a three phase AC system may be designed.

### Summary of the invention

The problem to be solved by the invention is to provide a 3-phase battery storage system, which can deliver a higher output voltage with a higher efficiency, better EMI characteristics and provides a higher reliability with a lower number of batteries. Further, a method of operating such a system is to be provided.

Solutions of the problem are described in the independent claims. The dependent claims relate to further improvements of the invention.

A 3-phase battery storage system may include three strings of battery modules. Each string may include a plurality of battery modules connected in series. Further battery modules may be connected in parallel. Each battery module includes at least a battery which may be any source of electrical DC power, e.g., based on a rechargeable technology, like LiPo, LiFe, Li-Ion, NiCd, NiMH or Sodium-ion. It may also include a fuel cell or solid-state battery. Each battery module further includes a plurality of switches and is configured to deliver at least a positive or negative battery voltage and optional a zero voltage. An exemplary switch configuration may be a H-Bridge. A module controller may be provided to set the switches for a desired output voltage. The module controllers of the strings may be controlled by a master controller such that the strings provide specific voltages or waveforms. Such AC voltages of the strings have all the same base frequency f0 and period t0. The amplitudes and/or the waveforms of the AC voltages may be different.

The three strings of battery modules are configured to deliver power to an external port or to receive power from the external port, which has three phase output ports. Each string has a first end and a second end. The first ends of the strings are connected together to a common point, and each of the second ends of the strings is connected to one of the phase output ports.

An external load or power source, e.g., a power grid, may be connected to the external port via the three phase output ports.

The common point is insulated from the external port. This means that there is no connection between the common point and the external port. Such a configuration may be called a floating neutral. Therefore, an external load or power source cannot be connected to the common point.

The strings are configured such that the sum of the voltages at the three phase output ports differs from the voltage at the common point in at least 10% of the period t0. In other words, there may be a voltage difference between the common point and the sum of the voltages at the three phase output ports. Such a difference may be more than 1%, 5%, 10% or 20% of the amplitude of the AC Voltage of any of the strings. In other words, the sum of the voltages of each of the strings Vsum = Vs1 + Vs2 + Vs3 is not equal to zero. For example, the absolute of the sum of the voltages of each of the strings | Vsum | may be in a range between 0.01% and 5% or 0.1% and 10% or 1% and 20% or 10% and 50% of the largest of the voltages of each of the strings. For the sum of the voltages of each of the strings, the voltages have to be added as vectors having a magnitude and a phase.

Such a configuration provides a higher flexibility in configuring and operating the battery modules and strings. As Vsum must not be kept at zero, there is an additional degree of freedom which may be used e.g. for using less switching cycles of the battery modules to reduce switching losses, battery wear, and electromagnetic radiation (EMI), for providing a higher output voltage without increasing the number of batteries, and for increasing reliability, as more batteries may fail in the system without affection the output voltage. Such a higher output voltage may be obtained, as the reference for an output must no more be the common point but may be an offset value (which adds to the output voltage of a string). Further, balancing can be done between strings without having an unbalanced load in the grid when the strings have different voltages.

In an embodiment, the strings are configured to deliver three phase electric power to the three phase output ports or to receive three phase electric power thereof. Here, a second string follows a first string with a phase shift of 120° and a third string follows the second string with a phase shift of 120°.

In normal three phase electrical systems, all three phase voltages are the same and have the same sinusoidal waveform with a 120° phase shift between the phase voltages, such that the sum of all three phase voltages is 0. This allows to connect an external load or power source, e.g., a grid to the common point, which is also called a neutral conductor or zero conductor. In such an arrangement, the delta voltages, i.e., the voltage differences of phase 1 - phase 2, phase 2 - phase 3 and phase 1 - phase 3 are the same.

In an embodiment, 3 essentially equal delta voltages may be provided by different phase voltages and/or phase voltages having a non-sinusoidal shape. Further, the waveform of the voltage of one string may differ from the waveform of the voltage of at least another string. The waveform of the voltage of at least one string may be asymmetric, e.g., a positive part of the waveform has a different shape from a negative part, and/or the waveform may have an offset.

With such phase voltages, there is a voltage difference between the sum of the voltages at the three phase output ports and the voltage at the common point. An external load or power source does not see this difference as long as it is not connected to the common point. Even with such phase voltages an external load or power source does not see any differences from a normal power source or load at the external port, as long as the delta voltages are the same.

When switching individual battery modules in a string on and off, the voltage of the string changes in steps of the battery voltage of the modules. The choice of the individual battery modules to be switched on and off can happen in a random way. If the battery modules are too different in their performance data (e.g. regarding SOC, SOH, internal resistance, temperature etc.) battery modules can be batched in groups of similar characteristics from where a randomized activation can happen.

If intermediate voltages of the string are required, the string may be operated with PWM (Pulse Width Modulation). The PWM may be controlled by space vector modulation.

In an embodiment, the peak voltage is extended for some time. So, the voltage of at least one string is constant for at least 5% up to 40% of the period t0. It may be held constant in a window of 5% up to 40% of the period t0 around the time of the peak voltage. During the time of a sinusoidal peak, the voltage variation is comparatively low, such that there is a good approximation by a constant voltage. The voltage may be held constant at a level defined by a certain number of batteries in a continuous on state without PWM. This reduces switching losses, reduces electromagnetic radiation, and increases battery lifetime due to a reduced pulsed load. Further, a more precise battery voltage measurement may be made during the longer intervals with PWM free string voltages, as dynamic effects of the battery are reduced. If for example, the voltage is held constant for 30° =8,33% of the period t0 which may happen twice for each phase per period t0, the switching losses may be reduced for about 1/6. The remaining strings may use PWM to set their voltage accordingly. Holding the output voltage constant may increase the maximum output voltage. If, for example, the output voltage is held constant for 12,5% of the period t0, then the output voltage may increase to 115%. With longer times an output voltage of about 120% may be obtained. This is only applicable to battery modules, as batteries deliver a stable voltage over a longer period of time. Modular multilevel converters (MMC) which are based on capacitors cannot do this, as these must be recharged in short time intervals. But a single module or a low number of modules having a capacitor instead of a battery may be used to further boost up the string voltage. It may only be used for short time peak loads and may be charged at lower string voltages. The time, where the voltage is held constant may be varied from period to period by a random amount, which may be between 20% and 2% or between 10% and 4% or between 7% and 5% of the period. This may broaden the spectrum of the output signal and improve EMI (Electromagnetic Interference) performance.

The time interval where the voltage is held constant may be centered about the sinusoidal peak, but it may also be offset e.g. for less than 20% or less than 10% of the length of the time interval.

In an embodiment, the constant voltage of the string does not have to be identical to sinusoidal peak voltage of the grid. It can be higher (at maximum the sum of all battery module voltage in the corresponding string) or lower. The lower bound can be determined in such a way, that the EMI is minimized due to switching operations and jumps in the common mode voltage or that a certain balancing goal can be achieved more easily. Since the state estimation usually is not as precise as measurements, the constant voltage can be adjusted ivia a random value. This mechanism can help to hold the estimation algorithms in a perturbed way so that a depletion of the probability space of certain state estimations can be actively counteracted.

In the same way one a string voltage is set above or below a nominal string voltage, where the value may be modified by a random value. This allows balancing and by using the random value, a better distributed balancing.

In an embodiment, the string voltages are controlled by a generalized space vector modulation (SVN) for N levels further including a discontinuity. Here, N is the number of battery modules per string. The strings may have individual numbers of N, e.g., if they are configured differently or if a battery module fails. For this purpose, the standard 2-level space vector modulation must first be extended to N-level (generalized algorithm). This may be done by a two-step method including: 1. determination of a base node (zero point) and 2. execution of the 2-level SVM in the sub hexagon around the base node. Each node in the voltage hexagon can be reached via different switch positions, so that there is a degree of freedom for setting the respective voltage vectors. Since each node is defined by 3 switching states (one per phase). A string voltage may be blocked over a certain range and reach the corresponding node by adjusting the remaining two string voltages. This blocking is called discontinuity.

The phase blocked over a sector has no switching operations at this time, which means that the number of switching operations can be reduced on average over the entire period. As switching operations are lossy, the efficiency of operation can be increased.

The strings may be discharged differently. If during a full period t0 all string voltages are the same and the load is symmetrical, all strings are discharged the same amount. An asymmetric load may draw a higher current from one or two strings than from the remaining string(s). By providing different string voltages, the amount of discharge of the strings can be modified. With an asymmetric load the string voltages may be adapted to compensate at least partially for the differences in load such that all strings are approximately discharged the same amount. With a symmetric load a string with a higher voltage may have a higher discharge than the other strings. By that way, the strings can be balanced. The above mentioned also applies for charging the strings.

In an embodiment, a harmonic component may be added to the string voltage. For example, a third harmonic of the sinusoidal voltage having a frequency of 3f0 (having three times the base frequency f0) may be added to the sinusoidal voltage of each string. Here, the voltage of the strings may comprise a component at frequency 3f0 of an amplitude between 0.05 and 0.4 times or between 0.1 and 0.3 times of the amplitude of the component at frequency f0. In specific embodiment, a sinusoidal wave with a component at f0 of 1.16 * U0 and at 3f0 with 0.14 * U0 would have a peak value of U0. In a 3-phase system, where the same component at 3f0 with the same amplitude is added to all three phases, the delta voltages do not show this component. Instead, the common point is shifted with a frequency of 3f0. A 3f0 filter for the delta voltages is not needed. The delta voltages have a signal at f0 only, with an amplitude of 1.16 times higher than without adding the 3f0 component. A similar effect can be obtained, when the output voltage of a string is held constant for a certain time as described above.

By this simple modification of the output signal, which is only possible, when the common point is insulated from the external port, the output voltage of a string can be increased. Therefore, with 8 modules in a string, 1 module may be saved. Further, reliability may be increased, as more batteries may fail in the system without affection the output voltage.

A 3-phase battery storage system may include a plurality of battery modules. The battery modules include at least:
- a first terminal and a second terminal,
- a battery having a positive pole and a negative pole,
- a first switch between the positive pole and the first terminal,
- a second switch between the negative pole and the first terminal,
- a third switch between the positive pole and the second terminal,
- a fourth switch between the negative pole and the second terminal.

This arrangement of the battery together with the switches allow for a configuration of the battery modules for:
- a positive mode where the second switch and the third switch are closed and the remaining switches are open. Here, is a positive battery voltage between the first terminal and the second terminal,
- a negative mode where the first switch and the fourth switch are closed and the remaining switches are open. Here, is a negative (inverted) battery voltage between the first terminal and the second terminal,
- a short circuit mode where either the first switch and the third switch or the second switch and the fourth switch are closed while all remaining switches are open. Here, is a voltage of 0V between the first terminal and the second terminal, as the battery is bridged,
- an open mode where all switches are open. Here, is a high impedance between the first terminal and the second terminal, interrupting current flow.

A string may be configured for a positive output voltage by configuring at least one battery module for a positive mode and the other modules for a short circuit mode. Further a configuration for a negative voltage may include configuring at least one battery module for a negative mode and the other modules for a short circuit mode. Charge may be transferred between battery modules in a string when at least one battery module is configured for a positive output voltage and at least one battery module is configured for a negative output voltage at the same time.

Another embodiment relates to a method of operating a 3-phase battery storage system as disclosed herein. The method may comprise configuring at least one of the strings to provide a constant output voltage without PWM in a window of 5% up to 40% of the period t0 around the time of the peak voltage.

### Description of Drawings

In the following the invention will be described by way of example, without limitation of the general inventive concept, on examples of embodiment with reference to the drawings.
Figure 1 shows a basic block diagram of an embodiment.
Figure 2 shows a basic block diagram of a string.
Figure 3 shows a first switching state.
Figure 4 shows a second switching state.
Figure 5 shows a third switching state.
Figure 6 shows a fourth switching state.
Figure 7 shows a basic 3 phase voltage
Figure 8 shows a voltage with added 3f0 component
Figure 9 shows a 3-phase voltage with added 3f0 component
Figure 10 shows a 3-phase voltage with extended peaks
Figure 11 shows a diagram of a modified 3 phase waveform

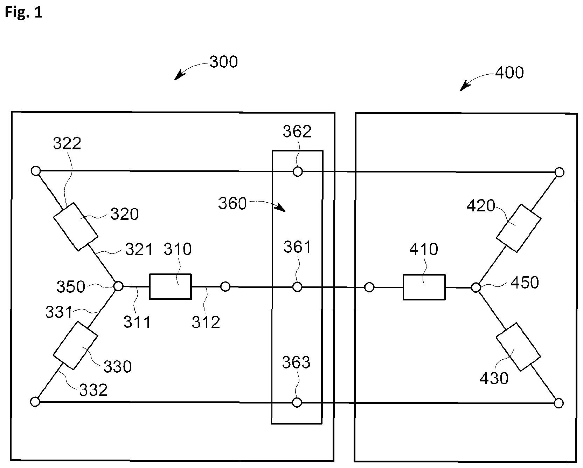

In Figure 1, a basic block diagram of an embodiment is shown. A 3-phase battery storage system 300 which may comprise three strings 310, 320, 330 of battery modules 200 may be configured to deliver power to an external port (360) or to receive power from the external port 360. The external port (360) has three phase output ports 361, 362, 363. The battery storage system may be a modular multilevel converter (MMC).

A load and/or power source 400, e.g. a power grid may be connected to the external port 360. The load and/or power source 400 may comprise three loads/sources 410, 420, 430 connected to a common neutral point 450.

Each string 310, 320, 330 comprises a plurality of battery modules 200 which are connected in series. The battery modules may include at least one energy storage element which may be a battery and a plurality of switches. The battery may be of a LiPo, LiFe, Li-Ion, NiCd, NiMH or Sodium-ion type. The switches may be semiconductor switches, e.g., MOSFETs or IGBTs. The battery modules may be configured by means of the switches to deliver at least a positive or negative battery voltage, such that the strings (310, 320, 330 can deliver individual AC string voltages. These string AC voltages have all the same frequency f0 and period t0. They may differ in their phase, voltage and waveform.

Each string 310, 320, 330 has a first end 311, 321, 331 and a second end 312, 322, 332. The first ends 311, 321, 331 of each string 310, 320, 330 are connected together to a common point 350. Each of the second ends 312, 322, 332 of the strings 310, 320, 330 is connected to a phase output ports 361, 362, 363. There might be filter elements (e.g. chokes) between the second ends 312, 322, 332 and the phase output ports 361, 362, 363.

The common point 350 is insulated from the external port 360. It may not be accessible from the outside of the battery storage system 300.

The strings 310, 320, 330 are configured such that the sum of the voltages at the three phase output ports 361, 362, 363 differs from the voltage at the common point in at least 10% of the period t0. Such a configuration provides several degrees of freedom in configuring the strings. If there would be a connection between the common point 350 and the neutral point 450 of the load 400, high equalizing currents may flow between these points.

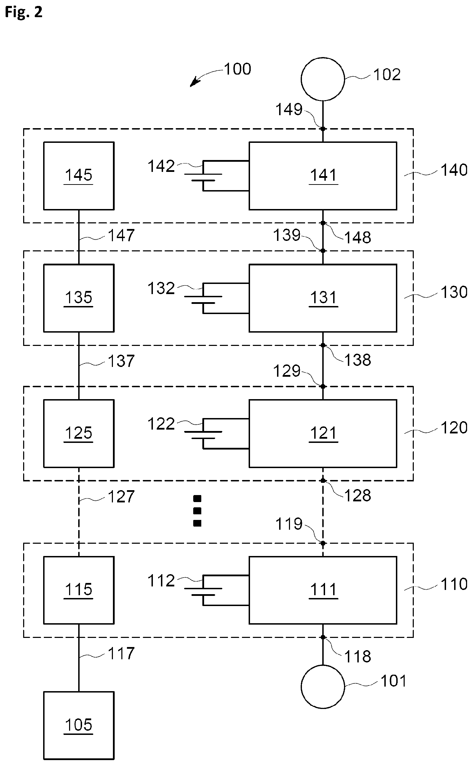

In Figure 2, a basic block diagram of a string 100 which may be one of the three strings 310, 320, 330 of battery modules, is shown. The string 100 includes a plurality of a battery modules 110 120, 130, 140 and may form a modular multilevel converter (MMC). Generally, at least two battery modules are required, but the number of battery modules may be extended as high as suitable for a desired output voltage. The embodiments mentioned herein are basically independent of the number of battery modules, as long as there are at least two battery modules in a string. The string has a first string port 101 and a second string port 102. For interconnecting the battery modules, each battery module has a first module port 118, 128, 138, 148 and a second module port 119, 129, 139, 149. The first module port 118 of a first battery module 110 is connected to the first string port 101. Further modules are connected with their first module port 128, 138, 148 to a second module port 119, 129, 139 of a preceding module to form a series connection. Further, the second module port 149 of the last battery module is connected to the second string port 102. Depending on the required output voltage or a required charging condition, a certain number of battery modules are switched in series by switches internal to the modules, as will be described later.

Each battery module 110 120, 130, 140 includes at least a battery 112, 122, 132, 142, a plurality of switches 111, 121, 131, 141 and an optional module controller 115, 125, 135, 145. Each module controller 115, 125, 135, 145 may be connected via a communication link 117, 127, 137, 147 to a master controller 105 which may control a string or a plurality of strings.

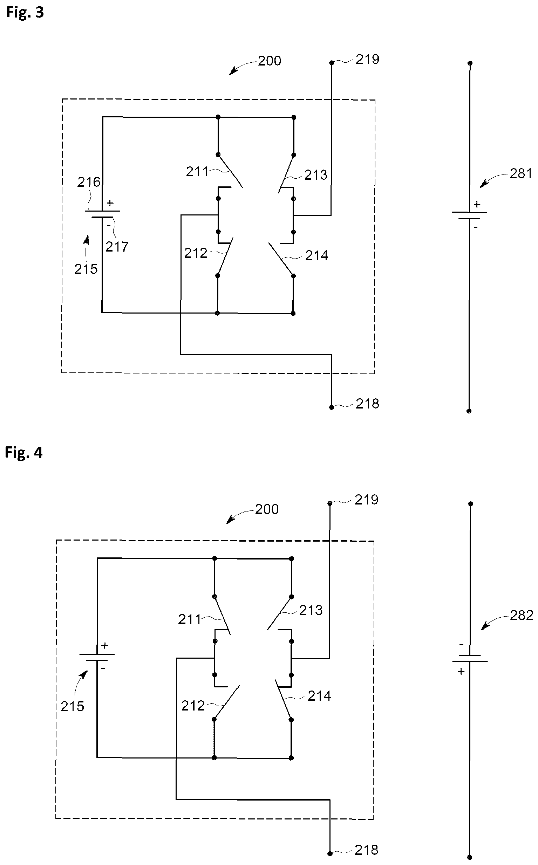

In Figure 3, a first switching state of a battery module 200 is shown. Specifically, in this Figure, a schematic diagram of the battery module 200 connected to a battery 215 in a positive direction is shown. The battery module 200 may include a full bridge, also called an H-bridge including four switches. This full bridge is only for demonstrating the basic switching function. Instead, any other suitable switching technology may be used. The full bridge includes four switches 211, 212, 213, 214, whereas the first switch 211 and the third switch 213 may be connected to the positive terminal 216 of battery 215 and the second switch 212 and the fourth switch 214 may be connected to the negative terminal 217 of battery 215. Further, the first switch 211 and the second switch 212 are connected together to a first module port 218, and the third switch 213 together with fourth switch 214 are connected to a second module port 219.

In this Figure, a first switching state is shown. First switch 211 and fourth switch 214 are open while second switch 212 and third switch 213 are closed, such that the battery is connected with its positive terminal 216 to the second module port 219 and with its negative terminal 217 to the first module port 218. On the right side next to the switch, an equivalent circuit diagram 281 with a battery connected between the module ports is shown.

In Figure 4, a second switching state is shown. This Figure basically shows the same components as the previous Figure, but with the switches 211 - 214 in different switching states. Here, first switch 211 and fourth switch 214 are closed while second switch 212 and third switch 213 are open. In this configuration the battery is connected in an inverted polarity, such that the positive terminal of the battery is now connected to the first module port 218, whereas the negative terminal of the battery is connected to the second module port 219. To the right is an equivalent circuit diagram 282 showing the inversely connected battery.

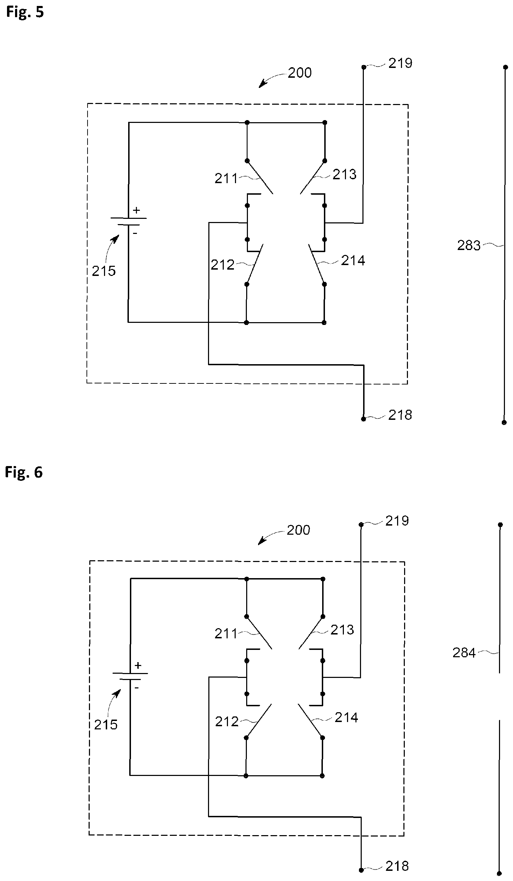

In Figure 5, a third switching state is shown. This Figure basically shows the same components as the previous two Figures, but with the switches 211 - 214 in different switching states. Here, the second switch 212 and fourth switch 214 are closed, whereas the first switch 211 and third switch 213 are open. This leads to a short circuit between the first module port 218 and the second module port 219 while the battery 215 is disconnected. This is shown in an equivalent circuit diagram 283. The second switch 212 and fourth switch 214 being open, whereas the first switch 211 and third switch 213 being closed may have the same effect.

In Figure 6, a fourth switching state is shown. This Figure basically shows the same components as the previous three Figures, but with all four switches in an open state. Consequently, the connection between the first module port 218 and the second module port 219 is open and the battery is disconnected. This is shown in equivalent circuit diagram 284 with an open circuit. If at least any three of the switches would be open, this would have the same effect.

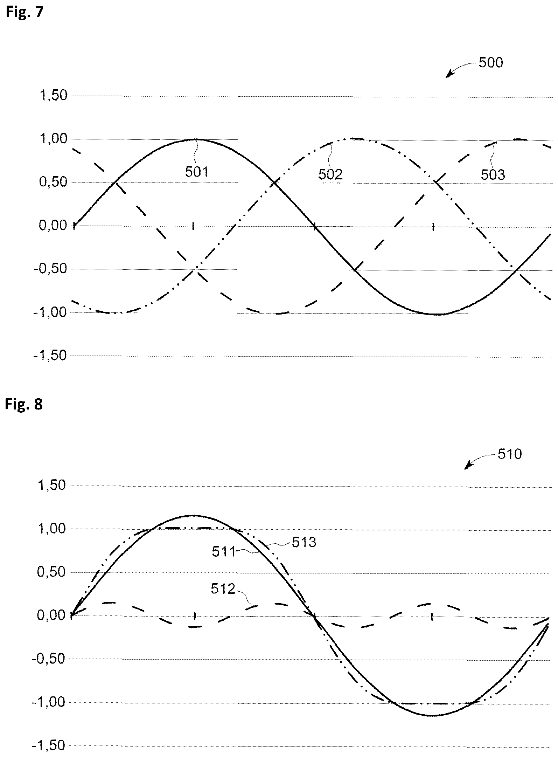

Figure 7 shows a normal 3-phase voltage 500 diagram with three phase voltages 501, 502, 503 having the same sinusoidal waveform, the same amplitude which is normalized herein to 1.00 and which have a phase shift of 120° against each other. Here, one period of t0 is shown between the left side and the right side of the diagram.

Figure 8 shows the voltage diagram 510 of one phase in a system, where a third harmonic of the sinusoidal voltage is added. The third harmonic has a frequency of 3f0 (having three times the base frequency f0). The original sinusoidal waveform is shown in curve 511 has a period t0 and a frequency f0. Further, it has a normalized amplitude of 1.15 in this example. A signal having a frequency of 3f0 at a lower amplitude which is a normalized value of 0.15 in this example is shown in curve 512. This is added to (or subtracted from) the original sinusoidal signal 511 to obtain a new signal 513. This has a peak value of 1.00 as the 3f0 signal 512 reduces the peak value of the original signal 511. Therefore, this original signal 511 can be generated by a string, which is only capable of peak voltage of 1.00.

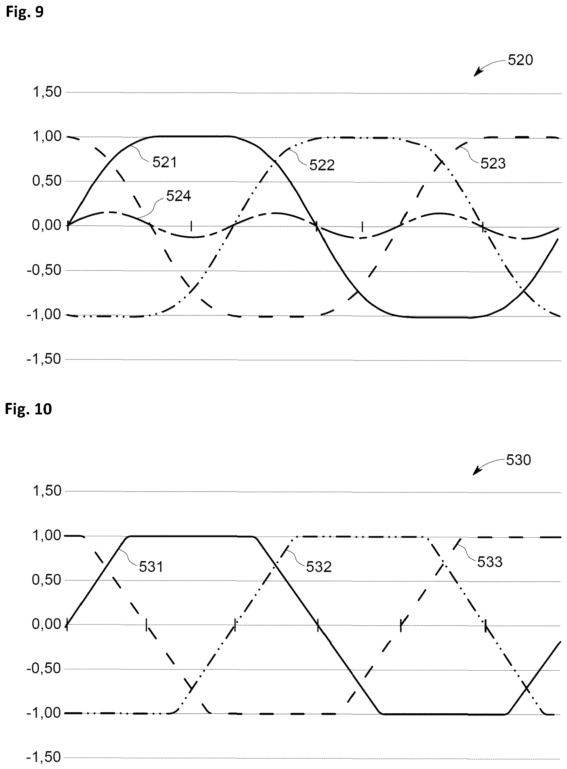

Figure 9 shows a 3-phase voltage diagram 520 with added 3f0 component. Taking the three voltages 501, 502, 503 of fig. 7 and adding the same voltage at 3f0 524 to each of these components results in the phase voltages 521, 522, 523. Here again, the three voltages 501, 502, 503 of fig. 7 have a normalized amplitude of 1.15 and the normalized amplitude of voltage at 3f0 524 is 0.15. As the voltage at 3f0 524 is added to all three phase voltages, basically the voltage at the strings common point 350 is modulated by this voltage. Therefore, the output voltages at the external port 360 do not show the 3f0 component such that there are sinusoidal voltages, but in this example may have a higher amplitude of 1.15 times the normal amplitude.

Figure 10 shows a 3-phase voltage diagram 530 with voltages having extended peaks. Here, the peaks of the voltages 531, 532, 533 are extended over a time of approximately 25% of a period t0. This leads to a similar effect as adding a 3f0 component. Therefore, the amplitude at the external port 360 is higher. Further, at the constant voltage sections, switching can be reduced, which leads to improved EMI characteristics, longer battery life and reduced power dissipation. In a modified embodiment, only one phase voltage may have extended peaks, while the other phase voltages are adapted to provide more sinusoidal voltages at the external port 360.

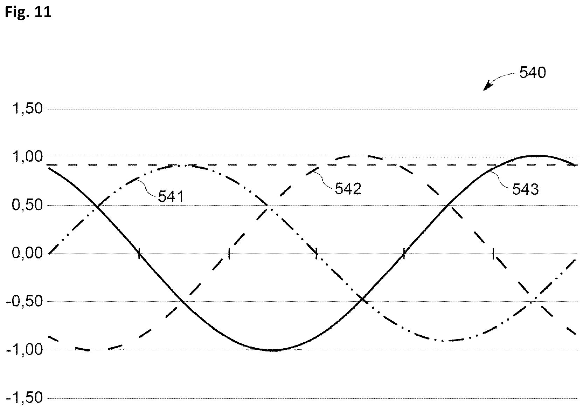

Figure 11 shows a diagram 540 of a modified 3 phase waveform. In this example, the phase voltage 541 has a lower amplitude as the other phase voltages 542, 543. The lower phase voltage 541 will provide a lower discharge rate, provided, the load is symmetric. The lower discharge rate may be used for balancing between strings. Even a small deviation between the voltages in a range of less than 1% of a voltage may provide a significant effect over time.

### List of reference numerals

100 string of battery storage system
101 first string port
102 second string port
105 master controller
110, 120, 130, 140 battery module
112, 122, 132, 142 battery
113, 123, 133, 143 temperature sensor
115, 125, 135, 145 module controller
117, 127, 137, 147 communication link
118, 128, 138, 148 first module port
119, 129, 139, 149 second module port
200 battery module
211, 212, 213, 214 switch
215 battery
216 positive terminal
217 negative terminal
218 first module port
219 second module port
281 Equivalent circuit diagram of connected battery
282 Equivalent circuit diagram of inverse connected battery
283 Equivalent circuit diagram of short circuit
284 Equivalent circuit diagram of open circuit
300 battery storage system
310 first string
311 first string first end
312 first string second end
320 second string
321 second string first end
322 second string second end
330 third string
331 third string first end
332 third string second end
350 strings common point
360 external port
361 first phase output port
362 second phase output port
363 third phase output port
400 load
410 first phase load/source
420 second phase load/source
430 third phase load/source
450 load neutral point
500 diagram of voltages in a 3-phase system
501, 502, 503 phase voltages
510 diagram of voltage with third harmonic
511 basic sinusoidal waveform f0
512 sinusoidal waveform 3f0
513 new waveform with f0 and 3f0
520 diagram of 3 phase voltages with f0 and 3f0
521, 522, 523 phase voltages with f0 and 3f0
530 diagram of voltage with extended peaks
531, 532, 533 voltage with extended peaks
540 diagram of modified waveform
541, 542, 543 modified phase voltages

## Claims

1. A 3-phase battery storage system (300) comprising three strings (310, 320, 330) of battery modules (200) configured to deliver power to an external port (360) or to receive power from the external port (360),
the external port (360) having three phase output ports (361, 362, 363), each string (310, 320, 330) comprising a plurality of battery modules (200) connected in series, the battery modules being configured to deliver at least a positive or negative battery voltage, such that the strings (310, 320, 330) deliver individual AC string voltages, all having a same frequency f0 and period t0,
each string (310, 320, 330) having a first end (311, 321, 331) and a second end (312, 322, 332),
the first ends (311, 321, 331) of each string (310, 320, 330) are connected together to a common point (350), and
each of the second ends (312, 322, 332) of the strings (310, 320, 330) is connected to a phase output port (361, 362, 363),
wherein
the common point (350) is insulated from the external port (360), and the strings (310, 320, 330) are configured such that there is a voltage difference between the sum of the voltages at the three phase output ports (361, 362, 363) to the common point in at least 10% of the period t0.

2. A 3-phase battery storage system (300) according to any of the previous claims, **characterized in, that**
the three strings (310, 320, 330) being configured to deliver three phase electric power to the phase output ports (361, 362, 363) or to receive three phase electric power thereof,
wherein a second string (302) follows a first string (310) with a phase shift of 120° and a third string (330) follows the second string (320) with a phase shift of 120°.

3. A 3-phase battery storage system (300) according to any of the previous claims, **characterized in, that**
a waveform of a voltage of one string differs from the waveform of the voltage of at least another string.

4. A 3-phase battery storage system (300) according to any of the previous claims, **characterized in, that**
the waveform of the voltage of at least one string is asymmetric and/or has an offset.

5. A 3-phase battery storage system (300) according to any of the previous claims, **characterized in, that**
the voltage of at least one string is constant for at least 10% up to 40% of the period t0.

6. A 3-phase battery storage system (300) according to any of the previous claims, **characterized in, that**
at least one battery module (200) of each of the strings (310, 320, 330) being PWM modulated wherein the PWM may be controlled by space vector modulation.

7. A 3-phase battery storage system (300) according to any of the previous claims, **characterized in, that**
at least one string is configured to provide a constant output voltage without PWM in a window of 5% up to 40% of the period t0 around the time of the peak voltage.

8. A 3-phase battery storage system (300) according to any of the previous claims, **characterized in, that**
a third harmonic of the sinusoidal voltage having a frequency of 3f0 is added to the sinusoidal voltage.

9. A 3-phase battery storage system (300) according to the previous claim, **characterized in, that**
the voltage of the strings (310, 320, 330) comprises a component at frequency 3f0 of an amplitude between 0.05 and 0.4 times or between 0.1 and 0.3 times of the amplitude of the component at frequency f0.

10. A 3-phase battery storage system (300) according to any of the previous claims, **characterized in, that**
the sum of the voltages of each of the strings (310, 320, 330) Vsum = Vs1 + Vs2 + Vs3 is not equal to zero.

11. A 3-phase battery storage system (300) according to any of the previous claims, **characterized in, that**
the absolute of the sum of the voltages of each of the strings (310, 320, 330) |Vsum| is in a range between 0.01% and 5% or 0.1% and 10% or 1% and 20% or 10% and 50% of the largest of the voltages of each of the strings.

12. A 3-phase battery storage system (300) according to any of the previous claims, wherein each of the battery modules (200) comprises at least:
- a first terminal (218) and a second terminal (219),
- a battery (212) further comprising a positive pole (213) and a negative pole (214),
- a first switch (211) between the positive pole (213) and the first terminal (218),
- a second switch (212) between the negative pole (214) and the first terminal (218),
- a third switch (213) between the positive pole (213) and the second terminal (219), and
- a fourth switch (214) between the negative pole (214) and the second terminal (219).

13. A 3-phase battery storage system (300) according to the previous claim,
wherein each of the battery modules (200) is configured for:
- a positive mode (281) where the second switch (212) and the third switch (213) are closed and the remaining switches are open,
- a negative mode (282) where the first switch (211) and the fourth switch (214) are closed and the remaining switches are open,
- a short circuit mode (283) where either the first switch (211) and the third switch (213) or the second switch (212) and the fourth switch (214) are closed while all remaining switches are open, and
- an open mode (284) where all switches are open.

14. A method of operating a 3-phase battery storage system (300) according to the previous claim, wherein the method comprises:
configuring at least one of the strings to provide a constant output voltage without PWM in a window of 5% up to 40% of the period t0 around the time of the peak voltage.
